# EUROPÄISCHE PATENTSCHRIFT

(11) **EP 0 779 368 B1**
(45) Veröffentlichungstag und Bekanntmachung des Hinweises auf die Patenterteilung: **13.06.2001**
(21) Anmeldenummer: 96118953.7
(22) Anmeldetag: 27.11.1996
(51) Int. Cl.: C21C 1/02

(54) **Verfahren zur Entschwefelung von Roheisenschmelzen**
Process for desulphurization of hot metal
Procédé de désulfuration de la fonte liquide

(30) Priorität: 14.12.1995 DE 19546738
(43) Veröffentlichungstag der Anmeldung: 18.06.1997
(73) Patentinhaber: EKO Stahl GmbH, D-15872 Eisenhüttenstadt (DE)
(72) Erfinder: Schmidt, Hans-Ulrich, 15890 Eisenhüttenstadt (DE); Holzhey, Werner, 15890 Eisenhüttenstadt (DE); Kruschke, Eberhard, 15890 Eisenhüttenstadt (DE); Wenzel, Klaus, 15890 Eisenhüttenstadt (DE)
(74) Vertreter: Wenzel, Klaus

(56) Entgegenhaltungen:
- DE-A- 4 206 091
- DE-C- 3 836 549
- GB-A- 455 042
- US-A- 4 600 434
- H. BURGHARDT ET AL.: "STAHLERZEUGUNG" 1982 , VEB DEUTSCHER VERLAG FÜR GRUNDSTOFFINDUSTRIE , LEIPZIG , DE XP002023955 * Seite 468 - Seite 472 *
- STAHL UND EISEN, Bd. 111, Nr. 9, 13.September 1991, DÜSSELDORF , DE, Seiten 85-91, XP002023954 H. WAGNER ET AL.: "Feuerfestverschleiss und Stahlentschwefelung ....."

## Beschreibung

Die Erfindung betrifft ein Verfahren zur Entschwefelung von Roheisenschmelzen durch Einsatz einer schmelzflüssigen Pfannenschlacke und einem pulverförmigen Entschwefelungsmittel.

Bei der Herstellung von Stahl unter Verwendung von schmelzflüssigem Roheisen aus dem Hochofenprozeß ist es erforderlich, das Roheisen vor dessen Einsatz in einem Konverter zu entschwefeln. Dazu sind verschiedene Verfahren und Entschwefelungsmittel bekannt, die den S-Gehalt des Roheisens auf die für den späteren Verwendungszweck des erzeugten Stahls notwendigen Prozentpunkte senken.

Üblich sind Verfahren, bei denen mittels Tauchlanze die staubförmigen Entschwefelungsmittel wie Kalziumkarbid, Kalk oder Soda mittels Trägergas in die Roheisenschmelze eingeblasen werden, mit dem Nachteil eines erheblichen Temperaturabfalls sowie eines hohen Roheisenverlustes.

Weiterhin ist es gemäß DE-PS 38 36 549 bekannt, Konverterschlacke in flüssiger oder erkalteter Form als Entschwefelungsschlacke einzusetzen. Entsprechend dieser Veröffentlichung wird die beim Sauerstoffaufblasverfahren anfallende Konverterschlacke der Zusammensetzung

| | |
|---|---|
| 10 bis 30 % | Eisenoxide (Fe On) |
| 5 bis 25 % | SiO₂ |
| 30 bis 60 % | CaO |
| 2 bis 12 % | MgO |
| 2 bis 10 % | MnO |

je nach Schwefelgehalt des Roheisens in Mengen von 5 bis 30 kg/t Roheisen zugesetzt. Verfahrensgemäß wird der auf der Roheisenschmelze schwimmende Anteil an Entschwefelungsschlacke durch Lichtbögen, die zwischen Elektroden und der Oberfläche der Schmelze gezogen werden, aufgeschmolzen und schmelzflüssig gehalten. Nachteil dieses Verfahrens zur Entschwefelung von Roheisen ist der hohe energetische und konstruktive Aufwand zur Aufrechterhaltung der Schmelzflüssigkeit der Entschwefelungsschlacke.

Ein weiteres Verfahren zur Entschwefelung von Roheisenschmelzen unter Einsatz einer Schlacke ist aus der DE 42 06 091 bekannt. Gemäß dieser Veröffentlichung wird eine basische Schlacke in einem kippbaren, mit Elektroden ausgerüsteten Niederschachtofen oder einem anderen durch Lichtbogen beheizten Ofen auf eine Temperatur von 1400 - 1800 °C aufgeschmolzen. In dieser flüssigen Schlacke läßt man verfahrensgemäß die zu entschwefelnde Roheisenschmelze gleichmäßig einfließen, wobei ein Verhältnis von Roheisen zu Schlacke von 10:1 nicht überschritten werden darf. Dieses Verfahren weist ebenfalls den Nachteil des energieintensiven Aufschmelzens der Entschwefelungsschlacke durch einen speziell ausgebildeten Niederschachtofen oder einem vergleichbaren lichtbogenbeheizten Ofen auf.

Aufgabe der Erfindung ist es, ein Verfahren zur Entschwefelung von Roheisenschmelzen zu finden, mit dem bei Vermeidung der genannten Nachteile der Entschwefelungsprozeß verkürzt und der Gesamtschlackenanfall in einem Stahlwerk gesenkt werden kann.

Erfindungsgemäß wird die Aufgabe dadurch gelöst, daß eine bei der pfannenmetallurgischen Behandlung einer Stahlschmelze anfallende schmelzflüssige Schlacke mit den Bestandteilen

| | |
|---|---|
| CaO | 45 - 70 % |
| SiO₂ | 2 - 17 % |
| Al₂O₃ | 14 - 22 % |
| MgO | 4 - 8 % |
| FeO | 0,5 - 6 % |
| sowie metallischen Schmelzresten | |

unmittelbar nach dem Verguß der Stahlschmelze zusammen mit der anfallenden Menge Reststahl in eine heiße Roheisenchargierpfanne entleert und dieser Schlacke mit dem Reststahl die zu entschwefelnde Roheisenschmelze mit einer Temperatur von 1250 - 1400 °C zugegeben wird, wobei eine erste Verwirbelung des Roheisens mit der Pfannenschlacke erfolgt und nachfolgend diese Roheisenschmelze mit der Pfannenschlacke einer Tauchlanzenbehandlung unter Zugabe eines pulverförmigen Entschwefelungsmittels wie CaO, CaC₂/Mg oder der gleichen unterzogen wird, bei der es durch die Beaufschlagung der Roheisenschmelze mittels eines Trägergases zu einer weiteren Verwirbelung der Schmelze mit dem eingesetzten pulverförmigen Entschwefelungsmittel unter Einbeziehung der Pfannenschlacke kommt, in deren Folge ein intensiver Entschwefelungsprozeß einsetzt.

Es wurde überraschend gefunden, daß bei Anwendung des erfindungsgemäßen Verfahrens die Behandlungszeit der Schmelze zur Erreichung eines vorgegebenen S-Gehaltes um bis zu 30 % gesenkt und die Menge des eingesetzten pulverförmigen Entschwefelungsmittels um bis zu 3 kg CaO pro t Roheisen gegenüber einer herkömmlichen Tauchlanzenbehandlung vermindert werden kann. Mit dem Einsatz einer schmelzflüssigen Pfannenschlacke bei der Tauchlanzenbehandlung einer einer Roheisenschmelze ist weiterhin der Vorteil einer Verminderung der Eisenverluste verbunden, welche mit diesem Verfahren um bis zu 5,5 kg/t Roheisen gesenkt werden können.

Das erfindungsgemäße Verfahren ermöglicht darüberhinaus eine Verminderung des Gesamtschlackeanfalls in einem Stahlwerk, bestehend aus Pfannenrestschlacke und Roheisenentschwefelungsschlacke, wodurch für diese schwer verwertbaren Schlacken erhebliche Kosten für deren Deponierung bzw. Aufarbeitung eingespart und Umweltbelastungen verringert werden können.

Das erfindungsgemäße Verfahren soll nachfolgend an einem Beispiel zur Entschwefelung einer Roheisenschmelze für deren Einsatz in einem Sauerstoffaufblaskonverter mit einem Fassungsvermögen von 240 t näher beschrieben werden. Entsprechend der Erfindung wird eine bei der pfannenmetallurgischen Behandlung einer Stahlschmelze, unter Nutzung eines Pfannenofens anfallende schmelzflüssige Pfannenschlacke mit einer Zusammensetzung von
- 60 ,9 % CaO
- 4,58 % SiO₂
- 20,9 % Al₂O₃
- 2,4 % FeO
- 5,6 % MgO
- sowie metallischen Schmelzresten
unmittelbar nach dem Verguß der Stahlschmelze zusammen mit der vorhandenen Menge Reststahl in eine heiße Roheisenchargierpfanne entleert und diese Schlakke mit dem Reststahl die für den Konvertereinsatz vorgesehene Roheisenschmelze mit einer Temperatur von 1330 °C zugegeben.

Die Roheisenschmelze mit einem Gewicht von ~ 200 t und einem S-Gehalt von 0,049 % wird bei dem Umfüllvorgang mit der Pfannenschlacke einer ersten Verwirbelung unterzogen. Der Anteil der Pfannenschlacke zur Roheisenschmelze beträgt etwa 2 %, wobei der Anteil je nach Schlackenanfall davon abweichen kann, jedoch grundsätzlich nur die Schlackenmenge von einer Schmelze eingesetzt wird.

Die zu entschwefelnde Roheisenschmelze wird nach deren Umfüllung in die Roheisenchargierpfanne einer Tauchlanzenbehandlung unter Zugabe von CaO unterzogen. Als Trägergas für das in pulverförmiger Form einzublasende Entschefelungsmittel wird Erdgas verwendet, wobei die Einblasparameter so gewählt sind, daß eine ausreichende Verwirbelung der Roheisenschmelze unter Einbeziehung der Pfannenschlacke erfolgt. Die Entschwefelung der Roheisenschmelze auf einen S-Gehalt von 0,009 % ist auf Grund des intensiven Entschwefelungsprozesses gemäß diesem Verfahren nach 26 min beendet, wobei der Verbrauch des verwendeten Entschwefelungsmittels CaO 5,3 kg/t Roheisen beträgt.
Die Entschwefelungsdauer und der Verbrauch an CaO liegen damit wesentlich unter den üblichen Werten von 40 min und 8,3 kg CaO/t Roheisen bei einer herkömmlichen Tauchlanzenbehandlung von Roheisenschmelzen. Durch den Einsatz der Pfannenschlacke als Entschwefelungsmittel werden die bisher anfallenden Eisenverluste infolge der Zugabe eines schmelzflüssigen CaO-Trägers sowie der verminderten Entschwefelungsmittelzugabe wesentlich gesenkt. Die Roheiseneinsparung beträgt in diesem Fall 5,4 kg/t Roheisen und der Schlackenanfall wird um 8,4 kg/t Roheisen vermindert.

## Patentansprüche

1. Verfahren zur Entschwefelung von Roheisenschmelzen, dadurch gekennzeichnet, daß eine bei der pfannenmetallurgischen Behandlung einer Stahlschmelze in einem Pfannenofen anfallende schmelzflüssige Schlacke mit den Bestandteilen
| | |
|---|---|
| CaO | 45 - 70 % |
| SiO₂ | 2 - 17 % |
| Al₂O₃ | 14 - 22 % |
| MgO | 4 - 8 % |
| FeO | 0,5 - 6 % |
| sowie metallischen Schmelzresten | |
unmittelbar nach dem Verguß der Stahlschmelze zusammen mit der anfallenden Menge Reststahl in eine heiße Roheisenchargierpfanne entleert und dieser Schlacke mit dem Reststahl die zu entschwefelnde Roheisenschmelze mit einer Temperatur von 1250 bis 1400 °C zugegeben wird, wobei eine erste Verwirbelung der Roheisenschmelze mit der Pfannenschlacke erfolgt und nachfolgend diese Roheisenschmelze mit der Pfannenschlacke einer Tauchlanzenbehandlung unter Zugabe eines pulverförmigen Entschwefelungsmittels unterzogen wird, bei der es durch Beaufschlagung der Roheisenschmelze mittels eines Trägergases zu einer weiteren Verwirbelung der Schmelze mit dem eingesetzten pulverförmigen Entschwefelungsmittel unter Einbeziehung der Pfannenschlacke kommt.

2. Verfahren nach Anspruch 1, dadurch gekennzeichnet, daß als pulverförmiges Entschwefelungsmittel CaO oder CaC₂/Mg verwendet werden.

## Claims

1. Method for desulphurization of pig-iron melts, characterized in that liquid slag which is produced in a crucible furnace during crucible-metallurgical treatment of a steel melt and has the components
| | |
|---|---|
| CaO | 45-70% |
| SiO₂ | 2-17% |
| Al₂O₃ | 14-22% |
| MgO | 4-8% |
| FeO | 0.5-6% |
| and metallic melt residues | |
is emptied into a hot pig-iron charging crucible immediately after the casting of the steel melt together with the amount of residual steel which is produced, and this slag together with the residual steel has added to it the pig-iron melt, which is to be desulphurized, at a temperature of 1250 to 1400°C, with first swirling of the pig-iron melt together with the crucible slag being carried out, and this pig-iron melt together with the crucible slag then being subjected to an immersed lance treatment with the addition of a desulphurization agent in the form of powder, during which, by applying a carrier gas to the pig-iron melt, the melt is swirled further together with the desulphurization agent in the form of powder which has been added, with inclusion of the crucible slag.

2. Method according to Claim 1, characterized in that CaO or CaC₂/Mg is used as the desulphurization agent in the form of power.

## Revendications

1. Procédé de désulfuration de masses fondues de fonte brute, caraotérisé en ce qu'une scorie en fusion se formant dans une poche de coulée, lors du traitement métallurgique en poche de coulée, d'une masse en fusion d'acier, ayant les constituants
| | |
|---|---|
| CaO | 45 - 70% |
| SiO₂ | 2 - 17% |
| Al₂O₃ | 14 - 22% |
| MgO | 4 - 8% |
| FeO | 0,5 - 6% |
| ainsi que des résidus de fusion métalliques, | |
est déversée immédiatement après la coulée de la masse fondue d'acier, conjointement à la quantité d'acier résiduel se formant dans une poche chaude de coulée de chargement de fonte brute et en ce que l'on ajoute à cette scorie, avec l'acier résiduel, la masse fondue de fonte brute à désulfurer à une température de 1250 à 1400°C, un premier tourbillonnement de la masse fondue de fonte brute ayant lieu dans la scorie de poche de coulée et cette masse fondue de fonte brute avec la scorie de poche de coulée étant ensuite soumise à un traitement à la lance d'immersion avec l'apport d'un agent de désulfuration pulvérulent, lors duquel il se produit, grâce à l'exposition de la masse fondue de fonte brute à un gaz vecteur, un tourbillonnement supplémentaire de la masse fondue avec l'agent de désulfuration pulvérulent utilisé, mettant en jeu la scorie de poche de coulée.

2. Procédé selon la revendication 1, caractérisé en ce que l'on utilise, en tant qu'agent de désulfuration pulvérulent, CaO ou CaC₂/Mg.
